# EUROPÄISCHE PATENTSCHRIFT

(11) **EP 2 534 015 B1**
(45) Veröffentlichungstag und Bekanntmachung des Hinweises auf die Patenterteilung: **13.11.2013**
(21) Anmeldenummer: 11703828.1
(22) Anmeldetag: 07.02.2011
(51) Int. Cl.: B60R 21/203, B60Q 5/00

(54) **SICHERHEITSANORDNUNG**
SAFETY ASSEMBLY
ARRANGEMENT DE SÉCURITÉ

(30) Priorität: 10.02.2010 DE 102010007569
(43) Veröffentlichungstag der Anmeldung: 19.12.2012
(73) Patentinhaber: Autoliv Development AB, 447 83 Vårgårda (SE)
(72) Erfinder: CHEVALIER, Nicolas, Doncaster 3108 Victoria (AU); KURIAKOSE-VALAKKATTI, Jean, Yallambie 3085 Victoria (AU); NORDQVIST, Jonas, St. Kilda East 3183 Victoria (AU)
(74) Vertreter: Stornebel, Kai
(86) Internationale Anmeldenummer: PCT/EP2011/000547
(87) Internationale Veröffentlichungsnummer: WO 2011/098238

(56) Entgegenhaltungen:
- WO-A1-2008/079057

## Beschreibung

Die Erfindung betrifft eine Sicherheitsanordnung mit einem Airbagmodul, das ein Gehäuse aufweist und in einem Lenkrad eines Kraftfahrzeuges montierbar ist, mit einer beweglich an dem Gehäuse befestigten Abdeckung, an der ein erster Hupenkontakt angeordnet ist. An dem Gehäuse ist zumindest ein zweiter Hupenkontakt angeordnet, der in einer Anfangsposition elektrisch von dem ersten Hupenkontakt getrennt ist und in einer Aktivierungsposition mit dem ersten Hupenkontakt in elektrischen Kontakt tritt, um ein Hupensignal auszulösen.

Die WO 2008/079057 A1 betrifft eine Sicherheitsanordnung in Gestalt eines Airbagmoduls, das an einem Lenkrad eines Kraftfahrzeuges montierbar ist. Das Airbagmodul weist ein Gehäuse und eine Abdeckung auf. Die Abdeckung ist beweglich an dem Gehäuse montiert. Ein Draht ist an der Abdeckung eingeclipst und ausgebildet, um mit Kontaktteilen in Verbindung zu treten, die an dem Gehäuse angeordnet sind, wenn die Abdeckung relativ zu dem Gehäuse verlagert wird. Der Draht und die Kontakte wirken zusammen als eine Schalteranordnung, die an einen elektrischen Schaltkreis angeschlossen werden kann, der die Fahrzeughupe ansteuert. Wird die Abdeckung in Richtung auf das Gehäuse verlagert, tritt der Draht mit dem Kontaktelement in Verbindung und schließt den elektrischen Schaltkreis. Das Kontaktelement ist integraler Bestandteil des Gehäuses, das aus einem metallischen, elektrisch leitenden Werkstoff ausgebildet ist, oder ein Metallelement das an ein Kunststoffgehäuse befestigt wird. Entsprechend offenbart die WO 2008/079057 A1 den Oberbegriff des Anspruchs 1.

Aufgabe der vorliegenden Erfindung ist es, eine Sicherheitsanordnung bereitzustellen, die leichter ist und kostengünstiger herzustellen ist.

Erfindungsgemäß wird diese Aufgabe durch eine Sicherheitsanordnung mit den Merkmalen des Hauptanspruches gelöst. Vorteilhafte Ausgestaltungen und Weiterbildungen der Erfindung sind in den Unteransprüchen, der Beschreibung und den Figuren aufgeführt.

Die erfindungsgemäße Sicherheitsanordnung mit einem Airbagmodul, das ein Gehäuse aufweist und in einem Lenkrad eines Kraftfahrzeuges montierbar ist, mit einer beweglich an dem Gehäuse befestigten Abdeckung, an der ein erster Hupenkontakt angeordnet ist, an dem Gehäuse ist zumindest ein zweiter Hupenkontakt angeordnet, der in einer Anfangsposition elektrisch von dem ersten Hupenkontakt getrennt ist und in einer Aktivierungsposition mit dem ersten Hupenkontakt in elektrischen Kontakt tritt, um ein Hupensignal auszulösen, sieht vor, dass der zweite Hupenkontakt als ein separates Bauteil ausgebildet ist, das über zumindest ein separates Verriegelungselement an dem Gehäuse festgelegt ist. Durch die Ausgestaltung des zweiten Hupenkontaktes als ein separates Bauteil, beispielsweise als ein Blechbauteil oder als ein elektrisch leitendes Formteil, ist es möglich, das Gehäuse aus einem Kunststoff zu fertigen, wodurch die Sicherheitsanordnung insgesamt leichter und preisweiter wird. Die Gefahr von Fehlauslösungen oder elektrischen Kurzschlüssen durch ein Metallgehäuse werden vermieden. Die elektrische Kontaktierung findet nur an den dafür vorgesehen Kontaktstellen statt.

An dem Gehäuse sind Rastaufnahmen ausgebildet, die die Verriegelungselemente formschlüssig aufnehmen. Die Rastaufnahmen können beispielsweise als Rahmen ausgebildet sein, in die die Verriegelungselemente hineingesteckt werden. Nach dem Hindurchstecken der Rastlasche des Verriegelungselementes durch die Rastaufnahme bzw. den Rahmen wird die federnde Rastlasche in die Ausgangsposition zurückspringen und eine formschlüssige Verriegelung des Verriegelungselementes an der Rastaufnahme bewirken.

Der zweite Hupenkontakt wird durch die Rastaufnahmen hindurchgeführt und formschlüssig an dem Gehäuse über das Verriegelungselement festgelegt. Das Verriegelungselement ist vorzugsweise aus einem Kunststoff hergestellt und weist eine Stirnfläche auf, auf der der zweite Hupenkontakt anliegt oder aufliegt. Durch das Abstützen des zweiten Hupenkontaktes auf der dem ersten Kontakt zugewandten Stirnfläche des Verriegelungselementes legt das Verriegelungselement den zweiten Hupenkontakt nicht nur an dem Gehäuse fest, sondern bildet gleichzeitig ein Widerlager und eine Anlagefläche für den zweiten Hupenkontakt im Bereich der Kontaktstelle zwischen dem ersten Hupenkontakt und dem zweiten Hupenkontakt aus. Die Kontaktstelle des zweiten Hupenkontaktes wird gegenüber dem ersten Hupenkontakt durch das Verriegelungselement fixiert, so dass keine Verlagerung des zweiten Hupenkontaktes relativ zu dem ersten Hupenkontakt nach Herstellung des elektrischen Kontaktes erfolgen kann. Dadurch wird die Auslösesicherheit des Hupensignals vergrößert.

Der erste Hupenkontakt kann als elektrisch leitender Draht ausgebildet sein, der an der Abdeckung festgelegt ist. Die Abdeckung weist in der Regel eine von der Sichtseite abgewandte, sich in Richtung des Gehäuses erstreckende Wandung auf, an der der Draht vorzugsweise an der Außenseite der Wandung festgelegt werden kann. Die Festlegung kann über ein Einclipsen oder ein Einrasten erfolgen, andere Festlegungsmöglichkeiten sind ebenfalls gegeben. Der Draht kann die Wandung der Abdeckung zumindest teilweise umgeben, wobei bevorzugt eine federnde Anlage des Drahtes an der Abdeckung vorhanden ist.

Das Gehäuse kann aus einem Kunststoff hergestellt sein und vorzugsweise vollständig aus Kunststoff bestehen, so dass das Gehäuse zur Aufnahme des Airbags sowie des Gasgenerators leicht und einfach in einem Formgebungsprozess, z.B. durch Spritzgießen hergestellt werden kann.

Der zweite Hupenkontakt kann als leitfähiges Band oder als leitfähiger Streifen, beispielsweise aus Blech, Metallgewebe oder dergleichen ausgebildet sein.

Das Verriegelungselement kann zumindest eine federnde Rastlasche aufweisen, die das Verriegelungselement formschlüssig an dem Gehäuse festlegt. Die Rastlasche kann in einer Ausnehmung oder ein Formschlusselement des Gehäuses eingreifen.

Vorteilhafterweise liegt in der Anfangsposition der erste Hupenkontakt in Verlagerungsrichtung der Abdeckung nicht mehr als 3 mm von dem zweiten Hupenkontakt entfernt, so dass nur ein geringer Verlagerungsweg der Abdeckung relativ zu dem Gehäuse erfolgen muss, um ein Hupensignal auszulösen. Durch den Einsatz eines separaten Verriegelungselementes ist es möglich, den Kontaktabstand nahezu beliebig einzustellen, ohne auf die Notwendigkeiten bei der Verriegelung und Festlegung des Gehäuses an der Abdeckung Rücksicht nehmen zu müssen.

Nachfolgend wird ein Ausführungsbeispiel der Erfindung anhand der beigefügten Figuren näher erläutert. Es zeigen:
- Figur 1 -: eine umgedrehte Abdeckung;
- Figur 2 -: eine Abdeckung mit montiertem ersten Hupenkontakt;
- Figur 3 -: eine Abdeckung mit eingesetztem Gehäuse;
- Figur 4 -: eine Ausgestaltung gemäß Figur 3 mit einem positionierten zweiten Hupenkontakten;
- Figur 5 -: eine fertig montierte Sicherheitsanordnung; sowie
- Figur 6 -: eine Detailansicht der Sicherheitsanordnung.

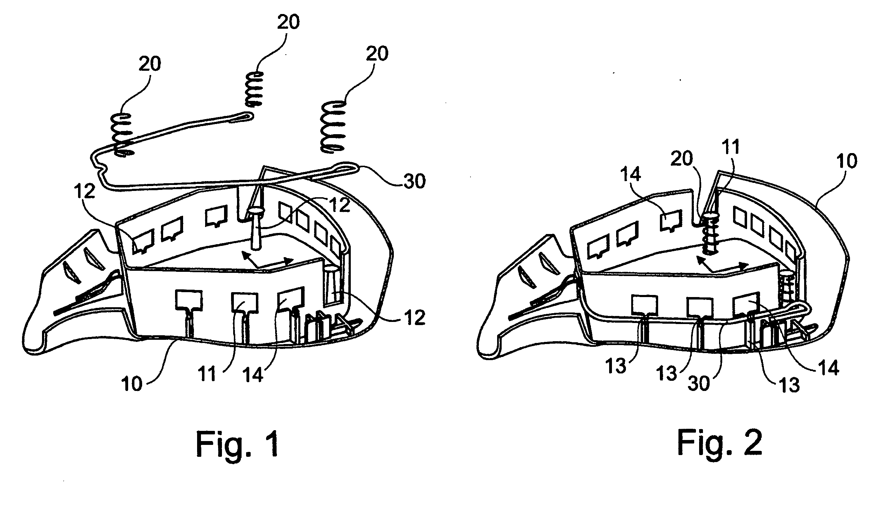

In der Figur 1 ist eine Abdeckung 10 einer Sicherheitsanordnung gezeigt, die Oberseite der Abdeckung 10 ist dabei nicht sichtbar. Von der Sichtseite abgewandt erstrecken sich vertikale Wandungen 11 nach oben. Innerhalb dieser Wandung 11 kann ein Gehäuse eines Airbagmoduls eingesetzt werden, das später erläutert werden wird. Ebenfalls an der Rückseite der Abdeckung 10 sind stiftartige Vorsprünge 12 zur Aufnahme und Fixierung von Wendelfedern 20 vorgesehen. Die Wendelfedern 20 werden auf die Vorsprünge 12 aufgesteckt und können dort an Nuten fixiert werden. Die Druckfedern 20 dienen dazu, die Abdeckung 10 von dem Gehäuse wegzudrücken.

Ebenfalls ist in der Figur 1 ein Draht 30 in einer U-förmigen, im Wesentlichen ebenen Gestalt zu erkennen. Der Draht 30 dient als erster Hupenkontakt und kann mit dem Schaltkreis, in dem die Hupe angeordnet ist, über Stecker oder dergleichen elektrisch verbunden werden. Der U-förmige Draht 30 kann an der Wandung 11 der Abdeckung 10 festgelegt werden. In der Wandung 11 sind darüber hinaus Ausnehmungen 14 für Rastelemente des Gehäuses vorgesehen. Die Funktion dieser Ausnehmungen 14 wird später erläutert werden. Die gesamte Abdeckung 10 kann einteilig als Spritzgussteil aus einem Kunststoff hergestellt werden. Die Druckfedern 20 ebenso wie der Draht 30 sind bevorzugt aus einem Metall gefertigt, der Draht 30 ist elektrisch leitend.

In der Figur 2 sind die Abdeckung 10, die Druckfedern 20 und der Draht 30 zusammengefügt und bilden ein Modulteil aus, das zur Aufnahme des Gehäuses mit dem Airbag bereit ist. An der Gehäusewandung 11 sind Abstützeinrichtungen und Aufnahmeeinrichtungen 13 für den Draht 30 vorgesehen. In diesen Abstützeinrichtungen und Aufnahmeeinrichtungen 13 wird der Draht 30 eingelegt und eingeclipst, so dass er nicht entlang der Wandung 11 in der Verlagerungsrichtung der Abdeckung 10, die im Wesentlichen der Längserstreckung der stiftartigen Aufnahmen 12 entspricht, verlagert werden kann. Der Draht 30 liegt in der montierten Stellung fest verriegelt an der Wandung 11 an.

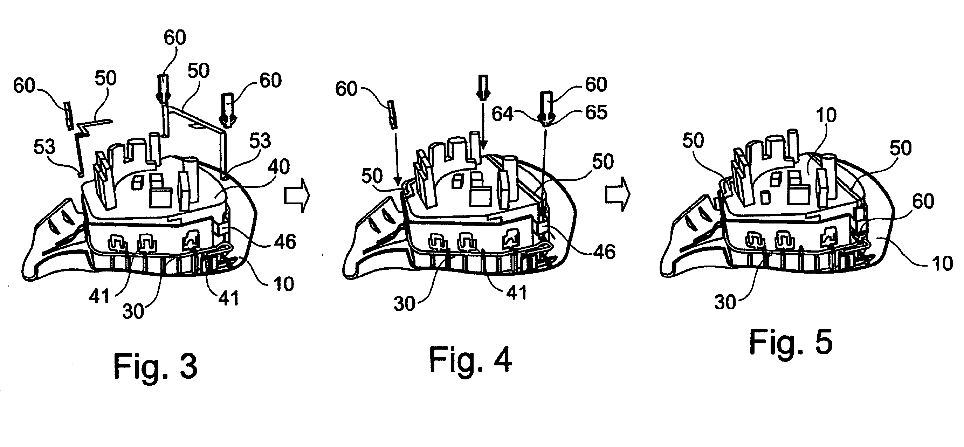

In der Figur 3 ist ein Gehäuse 40 aus Kunststoff bereits in den von der Wandung 11 gebildeten Hohlraum der Rückseite der Abdeckung 10 eingeführt. Innerhalb des Gehäuses 40 ist ein zusammengelegter Airbag angeordnet, der nicht zu erkennen ist. Ebenfalls ist an dem Gehäuse 40 ein Gasgenerator zum Befüllen des Airbags mit Entfaltungsgas festlegbar. Aus Gründen der Übersichtlichkeit ist der Gasgenerator nicht gezeigt.

Das Gehäuse 40 wird auf die Vorsprünge 12, die als Führungen dienen, aufgesetzt und gegen die Rückstellkraft der Federn 20 nach unten gedrückt, bis Rastelemente 41 in die Ausnehmungen 14 eingreifen. Die Rastelemente 41 weisen Hinterschneidungen auf, die eine Verlagerung der Abdeckung 10 relativ zu dem Gehäuse ermöglichen. Nach der Montage und dem maximalen Zusammendrücken der Druckfedern 20 federn diese zurück und bewegen die Rastelemente 41 in der Zeichnungsdarstellung nach oben, also von der Sichtseite der Abdeckung 10 weg. Die Ausnehmungen 14 legen die Rastvorsprünge 41 im Bereich der Hinterschneidung formschlüssig fest, so dass das Gehäuse 40 nicht aus dem Innenraum der Abdeckung 10 herausgedrückt werden kann. Das Gehäuse muss um den Rückfederweg hinaus nach unten gedrückt werden, damit eine Verriegelung stattfinden kann, in der Regel um acht bis zehn Millimeter, was bei einer integralen Ausbildung eines zweiten Hupenkontaktes an dem Gehäuse einen entsprechend großen Betätigungsweg der Abdeckung zur Folge hätte.

Ebenfalls in der Figur 3 sind Rastaufnahmen 46 in Gestalt von Rahmen zu erkennen, die an dem Gehäuse 40 ausgebildet oder angeformt sind. Die Funktionsweise der Rastaufnahmen 46 wird später erklärt werden.

Weiterhin sind zweite Hupenkontakte 50 in der dargestellten Ausführungsform dargestellt, die als winkelige, gebogene Blechbauteile ausgestaltet sind. Alternative Ausgestaltungsformen der zweiten Hupenkontakte 50 sind möglich und vorgesehen. In der dargestellten Ausführungsform weisen die zweiten Hupenkontakte 50 an den Enden nach unten, parallel zu der Wandung 11 der Abdeckung 10 und zu der Gehäusewandung des Gehäuses 40 erstreckenden Schenkel rechtwinklig dazu abkragende Kontaktbereiche 53 auf. Die Kontaktbereiche 53 sind dazu ausgebildet, mit dem Draht 30 in Kontakt zu treten, wenn die Abdeckung 10 in Richtung auf das Gehäuse 40 gegen die Druckkraft der Federn 20 verlagert wird.

Weiterhin sind Verriegelungselemente 60 gezeigt, mit denen die zweiten Hupenkontakte 50 an dem Gehäuse 40 über die Rastaufnahmen 46 festgelegt werden können.

In der Figur 4 ist die Vormontage der zweiten Hupenkontakte 50 gezeigt. Die sich entlang der Gehäusewandung erstreckenden Schenkel mit den abgewinkelten Kontaktstellen 53 sind durch die rahmenartigen Rastaufnahmen hindurchgeführt. Eine zusätzliche Fixierung kann über Vorsprünge oder dergleichen erfolgen. Die Kontaktstellen 53 liegen nun unmittelbar dem Draht 30 gegenüber. Die Verriegelungselemente 60 sind noch nicht eingeführt. Wie der Figur 4 zu entnehmen ist, weisen die aus Kunststoff gefertigten Verriegelungselemente 60 Rastlaschen 64 auf, die beim Einführen in die Rastaufnahme 46 zusammengedrückt werden. Nach dem Hindurchschieben verlagern sie sich nach außen und verriegeln somit das Verriegelungselement 60 formschlüssig an der Rastaufnahme 46. An der der abgewinkelten Kontaktfläche 53 zugewandten Stirnfläche 65 des Verriegelungselementes 60 kann im montierten Zustand eine mechanische Abstützung der Kontaktfläche 53 erfolgen, wenn das Verriegelungselement 60 vollständig in die Rastaufnahme 46 eingeführt ist.

Der montierte Zustand der Sicherheitsanordnung ist in der Figur 5 gezeigt. Die Sicherheitsanordnung ist als einbaufertiges Modul aus der Abdeckung 10, den nicht zu erkennenden Federn 20, dem ersten Hupenkontakt 30, dem Gehäuse 40, den zweiten Hupenkontakten 50 und den Verriegelungselementen 60 ausgebildet.

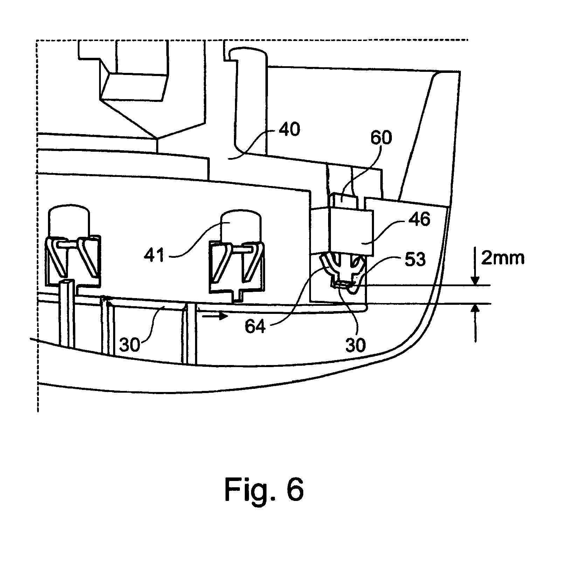

In der Figur 6 ist in einer Detaildarstellung die Montagesituation im Bereich der Kontaktstellen zwischen dem ersten Hupenkontakt 30 und dem zweiten Hupenkontakt 50 gezeigt. Ebenfalls ist zu erkennen, dass die Rastelemente 41 jeweils eine Hinterschneidung aufweisen, die es ermöglichen, dass Laschen sich über das obere Ende der Rastausnehmung 14 in der Wand 11 der Abdeckung 10 erstrecken. Die Rastelemente 41 sind einstückig an dem Gehäuse 40 angeformt. Ebenfalls ist die Rastaufnahme 46 einstückig an dem Gehäuse 40 angeformt. In der Figur 6 ist zu erkennen, dass die Rastlaschen 64 an der dem ersten Hupenkontakt 30 zugewandten Unterseite der Rastaufnahmen 46 bündig anliegt und dadurch eine formschlüssige Verriegelung einerseits des Verriegelungselementes 60 selbst und andererseits eine formschlüssige Verriegelung des eingeführten zweiten Hupenkontaktes 50 bewirkt. Die abgewinkelte Kontaktfläche 53 des zweiten Hupenkontaktes 50 liegt an der Stirnfläche 65 des Verriegelungselements 60 an, so dass das Verriegelungselement 60 einen mechanischen Anschlag und eine mechanische Abstützung oder ein Widerlager für die Kontaktfläche 53 bildet, so dass auch ein wiederholtes Betätigen des Hupenkontaktes durch Verlagerung der Abdeckung 10 nicht zu einer Verformung des relativ dünn und instabil ausgebildeten zweiten Hupenkontaktes 50 führt. Durch die mechanische Festlegung und Sicherung durch das Verriegelungselement 60 wird bei einer leichten Ausgestaltung der Sicherheitsanordnung gleichzeitig eine erhöhte Funktionssicherheit erreicht. Der Abstand zwischen dem Draht 30 als ersten Hupenkontakt und der Kontaktfläche 53 beträgt im dargestellten Ausführungsbeispiel 2 mm, so dass nur ein geringer Verlagerungsweg bereitgestellt werden muss, um den elektrischen Kontakt zu bewirken, so dass der Schaltkreis zur Aktivierung der Hupe geschlossen wird.

## Patentansprüche

1. Sicherheitsanordnung mit einem Airbagmodul, das ein Gehäuse (40) aufweist und in einem Lenkrad eines Kraftfahrzeuges montierbar ist, mit einer beweglich an dem Gehäuse (40) befestigten Abdeckung (10), an der ein erster Hupenkontakt (30) angeordnet ist, wobei an dem Gehäuse (40) zumindest ein zweiter Hupenkontakt (50) angeordnet ist, der in einer Anfangsposition elektrisch von dem ersten Hupenkontakt (30) getrennt ist und in einer Aktivierungsposition mit dem ersten Hupenkontakt (30) in elektrischen Kontakt tritt, um ein Hupensignal auszulösen wobei der zweite Hupenkontakt (50) als separates Bauteil ausgebildet ist, **dadurch gekennzeichnet, dass** der zweite Hupenkontakt (50) über zumindest ein separates Verriegelungselement (60) an dem Gehäuse (40) festgelegt ist, dass an dem Gehäuse (40) Rastaufnahmen (46) ausgebildet sind, die die Verriegelungselemente (60) formschlüssig aufnehmen und dass der zweite Hupenkontakt (50) durch die Rastaufnahmen (46) hindurchgeführt und formschlüssig an dem Gehäuse (40) über das Verriegelungselement (60) festgelegt ist.

2. Sicherheitsanordnung nach Anspruch 1, **dadurch gekennzeichnet, dass** der erste Hupenkontakt (30) als elektrisch leitender Draht ausgebildet ist, der an der Abdeckung (10) festgelegt ist.

3. Sicherheitsanordnung nach Anspruch 1 oder 2, **dadurch gekennzeichnet, dass** das Gehäuse (40) aus einem Kunststoff hergestellt ist, insbesondere vollständig aus Kunststoff besteht.

4. Sicherheitsanordnung nach einem der voranstehenden Ansprüche, **dadurch gekennzeichnet, dass** der zweite Hupenkontakt (50) als leitfähiges Band oder als leitfähiger Streifen ausgebildet ist.

5. Sicherheitsanordnung nach einem der voranstehenden Ansprüche, **dadurch gekennzeichnet, dass** das Verriegelungselement (60) zumindest eine federnde Rastlasche (64) aufweist, die das Verriegelungselement (60) formschlüssig an dem Gehäuse (40) festlegt.

6. Sicherheitsanordnung nach einem der voranstehenden Ansprüche, **dadurch gekennzeichnet, dass** das Verriegelungselement (60) aus einem Kunststoff hergestellt ist.

7. Sicherheitsanordnung nach einem der voranstehenden Ansprüche, **dadurch gekennzeichnet, dass** der zweite Hupenkontakt (50) an der dem ersten Hupenkontakt (30) zugewandten Stirnfläche (65) des Verriegelungselementes (60) anliegt oder aufliegt.

8. Sicherheitsanordnung nach einem der voranstehenden Ansprüche, **dadurch gekennzeichnet, dass** in der Anfangsposition der erste Hupenkontakt (30) in Verlagerungsrichtung der Abdeckung (10) nicht mehr als 3mm von dem zweiten Hupenkontakt (50) beabstandet ist.

## Claims

1. Safety arrangement with an airbag module, which has a housing (40) and can be mounted in a steering wheel of a motor vehicle, with a cover (10) fastened movably on the housing (40), on which cover a first horn contact (30) is arranged, wherein at least a second horn contact (50) is arranged on the housing (40), which contact is separated electrically from the first horn contact (30) in a starting position and comes into electrical contact with the first horn contact (30) in an activation position, in order to trigger a horn signal, wherein the second horn contact (50) is formed as a separate component, **characterised by** that the second horn contact (50) is fixed on the housing (40) via at least one separate locking element (60), that latching receptacles (46) are formed on the housing (40), which receptacles take up the locking elements (60) in a positive-locking manner, and that the second horn contact (50) is led through the latching receptacles (46) and is fixed in a positive-locking manner on the housing (40) via the locking element (60).

2. Safety arrangement according to claim 1, **characterised by** that the first horn contact (30) is formed as an electrically conductive wire, which is fixed on the cover (10).

3. Safety arrangement according to claim 1 or 2, **characterised by** that the housing (40) is manufactured from a plastic, in particular completely from plastic.

4. Safety arrangement according to one of the preceding claims, **characterised by** that the second horn contact (50) is formed as a conductive band or as a conductive strip.

5. Safety arrangement according to one of the preceding claims, **characterised by** that the locking element (60) has at least one resilient latching lug (64), which fixes the locking element (60) in a positive-locking manner on the housing (40).

6. Safety arrangement according to one of the preceding claims, **characterised by** that the locking element (60) is manufactured from a plastic.

7. Safety arrangement according to one of the preceding claims, **characterised by** that the second horn contact (50) abuts or rests on the end face (65) of the locking element (60) that faces the first horn contact (30).

8. Safety arrangement according to one of the preceding claims, **characterised by** that in the starting position, the first horn contact (30) is spaced from the second horn contact (50) by no more than 3 mm in the direction of displacement of the cover (10).

## Revendications

1. Arrangement de sécurité comprenant un module de coussin gonflable, qui présente un boîtier (40) et peut être monté dans un volant d'un véhicule à moteur, comprenant un couvercle (10) fixé mobile sur le boîtier (40), sur lequel couvercle un premier contact d'avertisseur sonore (30) est disposé, dans lequel au moins un second contact d'avertisseur sonore (50) est disposé sur le boîtier (40), lequel second contact d'avertisseur sonore est séparé électriquement du premier contact d'avertisseur sonore (30) dans une position initiale et vient en contact électrique avec le premier contact d'avertisseur sonore (30) dans une position d'activation, pour déclencher un signal d'avertisseur sonore, dans lequel le second contact d'avertisseur sonore (50) est formé en tant qu'élément séparé, **caractérisé en ce que** le second contact d'avertisseur sonore (50) est fixé au boîtier (40) via au moins un élément de verrouillage (60) séparé, **en ce que** des logements d'encliquetage (46) sont formés sur le boîtier (40), lesquels reçoivent les éléments de verrouillage (60) par coopération de formes et **en ce que** le second contact d'avertisseur sonore (50) est introduit à travers les logements d'encliquetage (46) et fixé par coopération de formes au boîtier (40) via l'élément de verrouillage (60).

2. Arrangement de sécurité selon la revendication 1, **caractérisé en ce que** le premier contact d'avertisseur sonore (30) est réalisé sous forme de fil électriquement conducteur qui est fixé sur le couvercle (10).

3. Arrangement de sécurité selon la revendication 1 ou 2, **caractérisé en ce que** le boîtier (40) est fabriqué en une matière plastique, et en particulier est composé entièrement de matière plastique.

4. Arrangement de sécurité selon l'une des revendications précédentes, **caractérisé en ce que** le second contact d'avertisseur sonore (50) est réalisé sous forme de ruban conducteur ou de bande conductrice.

5. Arrangement de sécurité selon l'une des revendications précédentes, **caractérisé en ce que** l'élément de verrouillage (60) présente au moins une languette d'encliquetage (64) résiliente qui fixe l'élément de verrouillage (60) au boîtier (40) par coopération de formes.

6. Arrangement de sécurité selon l'une des revendications précédentes, **caractérisé en ce que** l'élément de verrouillage (60) est fabriqué en une matière plastique.

7. Arrangement de sécurité selon l'une des revendications précédentes, **caractérisé en ce que** le second contact d'avertisseur sonore (50) est adjacent à ou appuie sur la surface frontale (65) de l'élément de verrouillage (60) tournée vers le premier contact d'avertisseur sonore (30).

8. Arrangement de sécurité selon l'une des revendications précédentes, **caractérisé en ce que** dans la position initiale le premier contact d'avertisseur sonore (30) n'est pas espacé de plus de 3 mm du second contact d'avertisseur sonore (50) dans la direction de déplacement du couvercle (10).
